# EUROPÄISCHE PATENTSCHRIFT

(11) **EP 1 210 680 B1**
(45) Veröffentlichungstag und Bekanntmachung des Hinweises auf die Patenterteilung: **14.04.2004**
(21) Anmeldenummer: 00960614.6
(22) Anmeldetag: 06.09.2000
(51) Int. Cl.: G06F 17/60, G07C 9/00

(54) **VERFAHREN UND ANORDNUNG ZUR ERFASSUNG UND ANALYSE DES REZEPTIONSVRHALTENS VON PERSONEN**
METHOD AND DEVICE FOR DETECTING AND ANALYZING THE RECEPTION BEHAVIOR OF PEOPLE
PROCEDE ET DISPOSITIF POUR DETECTER ET ANALYSER LE COMPORTEMENT EN RECEPTION DE PERSONNES

(30) Priorität: 06.09.1999 DE 19943703
(43) Veröffentlichungstag der Anmeldung: 05.06.2002
(73) Patentinhaber: DisplayCom GmbH, 07743 Jena (DE)
(72) Erfinder: Lausch, Holger, Dr., 07743 Jena (DE)
(74) Vertreter: Bock, Gerhard, Dipl.-Ing.
(86) Internationale Anmeldenummer: PCT/EP2000/008698
(87) Internationale Veröffentlichungsnummer: WO 2001/018697

(56) Entgegenhaltungen:
- EP-A- 0 823 821
- WO-A-94/27408
- WO-A-98/08208
- WO-A-98/22901
- US-A- 5 121 201
- US-A- 5 764 283
- US-A- 5 923 252

## Beschreibung

Die Erfindung betrifft ein Verfahren und eine Anordnung zur Erfassung und Analyse des Rezeptionsverhaltens von Personen in mindestens einem Rezeptionsraum in Abhängigkeit von visuell, audiovisuell und auditiv vermittelten Botschaften, gemäß der Gattung der Patentansprüche. Sie ist insbesondere bestimmt für die automatische und objektiv verifizierende Ermittlung der Werbewirksamkeit von Botschaften, Aktionen und Einrichtungen zur Lenkung von Kundenströmen sowie zur Ermittlung des gezielten Kundenverhaltens in Geschäften, Ladenstraßen, Einkaufspassagen, Terminals, Bahnhöfen, Tankstellen usw..

Zur Ermittlung der Effektivität von Werbemaßnahmen für Produkte und Dienstleistungen werden Sensoren (Infrarotsensoren, CCD u. a.) in geeigneten Anordnungen verwendet, um Personen beim Eintritt in einen und beim Austritt aus einem Werbebereich zu zählen sowie die Dauer ihres Aufenthalts im Werbebereich mehr oder weniger statistisch zu ermitteln. Ggf. kann auch das Kaufverhalten der Personen in Abhängigkeit von einer laufenden oder nicht laufenden Werbung durch die Ermittlung der tatsächlich gekauften Waren an Hand der Registrierungen der elektronischen Kassen am Ausgang eines Werbe- bzw. Kaufbereichs indirekt ermittelt werden. Alle Ergebnisse können in einem Rechner ausgewertet und so gewisse Rückschlüsse auf das Kaufverhalten der Rezepienten in Abhängigkeit von der Werbung geschlossen werden. Diese durch WO-A-98/22901 bekannte Methode ist jedoch in ihrer bisher praktizierten Form recht ungenau, weil bspw. eine bloße Anwesenheit im Werbebereich noch nichts über die Beachtung der Werbung aussagt.
Eine genaue Methode zur Bestimmung der Wahrnehmung von visuellen oder audiovisuellen Botschaften ist das sogenannte "eye tracking", bei dem die Bewegungen der Augen einer oder weniger Personen an Hand von geeigneten und geeignet angeordneten Sensoren festgestellt und registriert werden. Die Augen- und Pupillenstellung signalisiert die Wahrnehmung und Beachtung von Werbemitteln durch den jeweiligen Rezepienten, und über eine lange, mit Befragungen gekoppelte Analysekette ist ein Zusammenhang zwischen der Wahrnehmung bzw. Beachtung der Werbung und dem Kaufverhalten des Rezepienten herstellbar. Diese Methode ist technisch sehr aufwendig, wenn man bedenkt, daß sich i. a. mehrere Rezepienten in einem Werbe- und Kaufbereich aufhalten, wobei für jeden Rezepienten die Augenbewegung zu verfolgen wäre.
Ferner sind verschiedene Verfahren zur Extraktion von Personen in Videobildern sowie des Auffindens von Kopf- und Schulterformationen und des Erkennens und Speicherns von Gesichtern bekannt. Sie dienen zur Zählung und Identifizierung sowie zur Verifikation des Vorhandenseins von Personen. Dabei werden unter anderen Kopf, Gesicht oder Schultern generell erkannt und ihnen Körpermodelle zugeordnet. Diese modellierten Körper und daraus resultierende Körperkoordinaten sind weitgehend virtuell und nicht für eine reale Hinwendungs- und Kommunikationsanalyse brauchbar.

Aufgabe der Erfindung ist daher die Schaffung eines genauen und wenig aufwendigen Verfahrens zur Erfassung, Analyse und Bewertung von Personenbewegungen zur Ermittlung der Werbewirksamkeit von Botschaften, Aktionen und Kundenstromlenkungen und einer Anordnung zur Durchführung des Verfahrens.

Gemäß der Erfindung wird diese Aufgabe durch die kennzeichnenden Merkmale des ersten und vierten Patentanspruchs gelöst und durch die kennzeichnenden Merkmale der Unteransprüche vorteilhaft ausgestaltet. Die Erfindung ist dadurch gekennzeichnet, dass ein definierter Raum in seiner Gesamtheit und in seinen Einzelheiten mit einer relativ hohen Frequenz und mit Hilfe mindestens eines passiven oder aktiven Sensors wiederholt erfaßt wird. Diese Erfassung kann mit einer Personenzählung und/oder -identifizierung verbunden sein. Die Frequenz der Erfassung soll größer als Eins sein, sie beträgt günstigerweise 7 bis 30 Hz. Der Sensor/die Sensoren kann/können als CCD-Kamera (passiv) oder Laser oder andere elektromagnetische oder akustische Wellen bzw. thermische Strahlen (aktiv und passiv) abgebende bzw. aufnehmende Sensoren ausgebildet sein. Er/sie kann/können an der Decke oder an den Seitenwänden, im oberen Bereich des definierten Raumes angeordnet sein. Bei Verwendung eines elektromagnetischen oder akustischen oder thermischen Senders wird der Inhalt des Raumes in schneller Folge abgetastet und so ein Profil über dem Raumgrundriss einschließlich der im Raum befindlichen Objekte bzw. Subjekte aktiv erzeugt, während bei einer CCD-Kamera der Rauminhalt auf eine CCD-Matrix abgebildet wird, die für den Abbildungsprozess selbst passiv ist. In jedem Fall können nicht nur alle Veränderungen im Raum und die Spuren der sich im Raum bewegenden Personen und Gegenstände von ihrem Eintritt in den Raum bis zu ihrem Austritt aus dem Raum registriert werden, sondern es können auch die Drehungen und (Hin-) Wendungen des Körpers bzw. des Kopfes der jeweiligen Person, die Veränderung ihrer Haltung bzw. der Haltung ihrer Extremitäten, aber auch die Geschwindigkeiten und Verweildauern der einzelnen Objekte und Subjekte zeitabhängig erfasst werden. Sich nicht bewegende Objekte werden zwar ebenfalls registriert, jedoch im weiteren Datenverarbeitungsverfahren ausgeschieden bzw. nicht berücksichtigt. Der Rauminhalt kann nach dem Einbildverfahren oder Zweibildverfahren (stereoskopisch) erfasst werden. Ebenso ist es möglich, nicht nur Schwarz-Weiß-Bilder, sondern auch farbige Bilder, und nicht nur optische, sondern auch mit Radio- oder Wärmestrahlen erzeugte Bilder bzw. Reflexionen bspw. spektroskopisch auszuwerten. Auf diese Weise ist es auch möglich, Objekte und Subjekte auch nach Größe, Geschlecht und Alter zu erfassen, so lange sie sich im definierten Raum befinden.

Zur Erfassung bzw. Identifizierung der im definierten Raum befindlichen bzw. sich bewegenden Objekte und Subjekte bedient man sich erfindungsgemäß vorzugsweise der Mittel und Methoden (Algorithmen) der Bildverarbeitung. Aus Grau- bzw. Farbwerten oder charakteristischen, vorzugsweise umschreibenden Vielecken, einschließlich Dreiecken, werden Schwerpunkte ermittelt, und aus deren zeitabhängigen Lageveränderungen das Bewegungsverhalten von Personen und Gegenständen abgeleitet. Zur Feststellung ihrer Anzahl, Positionen, Bewegungsrichtungen, Bewegungsmuster, Geschwindigkeiten, Verweildauern, Körperhaltungen und -drehungen sowie Blickrichtungen können auch differentielle Schwerpunkte gebildet werden, die unter Einbeziehung markanter Punkte oder Linien des Körpers, seiner Extremitäten, der Schultern und/oder des Kopfes von Personen in einem kartesischen Raumkoordinatensystem oder vektoriell erfaßt und verarbeitet werden.
Das erfindungsgemäße Verfahren ermöglicht gegenüber den bekannten Verfahren auch eine höhere Zählgenauigkeit, weil die Zählung nicht entlang einer Schranke (Linie, Ebene), sondern im Raum erfolgt. Eine weitere Differenzierung der erfaßten Personen ist durch die spektroskopische und/oder thermische Analyse der an diesen reflektierten Strahlung bzw. Wellen möglich.

Eine Anordnung zur Erfassung von Zahlen und Bewegungen, Merkmalen und Koordinaten von Objekten und Subjekten in Abhängigkeit von dargebotenen Botschaften umfasst prinzipiell einen oder mehrere Sensoren (Sensormodule) oder Kameras (Kameramodule), die an der Decke und/oder den Seitenwänden, insbesondere im oberen, deckennahen Bereich eines definierten Raumes angeordnet sind, den Sensoren/Kameras nachgeordnete Bildverarbeitungsmodule mit Framegrabbern, Socket-, Ethernet- bzw. anderen Datenfernübertragungsschnittstellen und einen Datenbankmodul (mit Socket- bzw. Ethernetschnittstellen). Die einzelnen Datenbankmodule können über Datenfernübertragung mit einem zentralen Auswerte- und/oder Befehlsmodul verbunden sein, der die Ergebnisse aus den von den Sensoren gelieferten Signalen bildet und die in den definierten Räumen dargebotenen Botschaften, Aktionen und Kundenleitsysteme beeinflussen und steuern kann. Jedem Sensor- bzw. Kameramodul ist ein Sensorsignal- bzw. Bildverarbeitungsmodul nachgeordnet, der jedes in den definierten Raum eintretende Objekt oder Subjekt erfasst und als solches identifiziert und ggf. differenziert, auf Grund der wiederholten Abtastung oder Aufnahme des Raumes und seines Inhaltes die Spur des Objektes/ Subjektes, seine Bewegungen im und durch den Raum bis zum Verlassen des Raumes sowie seine spezifischen Merkmale in oben genannter Weise erfasst und die so gewonnenen Ergebnisse an den auswertenden Datenbankmodul weitergibt. Dabei kann ein Datenbankmodul zu mehreren Sensor- und Bildverarbeitungsmodulen gehören.

Im Verhältnis zwischen der Sensorinformations- bzw. Bildverarbeitung und der statistisch auswertenden Datenbank kann der Sensor- bzw. Bildverarbeitungsmodul beständig eine Vielzahl von Daten generieren, mit deren Analyse im Datenbankmodul wahlweise bzw. gleichzeitig Informationen über Kundenströme und Rezepientenverhalten bis hin zum Einzelkunden quantifiziert und qualifiziert erhalten werden können. Gegebenenfalls kann der Sensor- bzw. Bildverarbeitungsmodul auf Anforderung der Bildprojektion bei Werbedisplays bei jedem neuen Werbespot gestartet, abgefragt und/oder dessen Informationen erfasst werden. Im vorstehend beschriebenen ersten wie im zweiten Fall ist die zeitbezogene und spotbezogene bzw. inhaltsbezogene Analyse des Rezepientenverhaltens möglich. Im vorgenannten zweiten Fall ist im Ganzen nur eine spotbezogene Analyse des Rezepientenverhaltens durchführbar. Sofern der Spot aber in Intervalle zerlegt werden kann, ist wiederum eine zeit- und sequenzbezogene Analyse möglich, die Rückschlüsse bezüglich der Spotinhalte und -strukturen zuläßt. Ist die Spotanalyse in Intervalle zerlegt, so ist eine Optimierung der Spotinhalte und Spotstruktur auf Grund der Wirksamkeit bzw. Beachtung der einzelnen Werbebotschaftssequenzen möglich. Infolge der hohen Bildanalysefrequenz ist eine interne Zerlegung der Spots möglich. Da bspw. bei einem 15 Sekunden-Spot bei einer Abtastfrequenz von 7,5 Hz mehr als 100 Bilder für die Analyse zur Verfügung stehen, die in mehrere, bspw. fünf sinnvolle Spotintervalle aufgeteilt werden können, läßt sich daraus die Werbewirksamkeit der einzelnen Szenen recht gut und exakt ermitteln.

Die Erfindung wird nachstehend an Hand der schematischen Zeichnung näher erläutert. Es zeigen:
- Fig. 1: eine Passage mit drei definierten Räumen,
- Fig. 2: den Einfluss der Zentralperspektive der Kamera auf den erfassten Raum,
- Fig. 3: eine Abbildung eines Rezeptionsraumes auf die CCD-Matrix einer Kamera,
- Fig. 4: den grundsätzlichen Aufbau einer erfindungsgemäßen Anordnung und
- Fig. 5: die Verbindung mehrerer erfindungsgmäßer Anordnungen mit einer Zentrale zur Auswertung und Befehlsgabe.

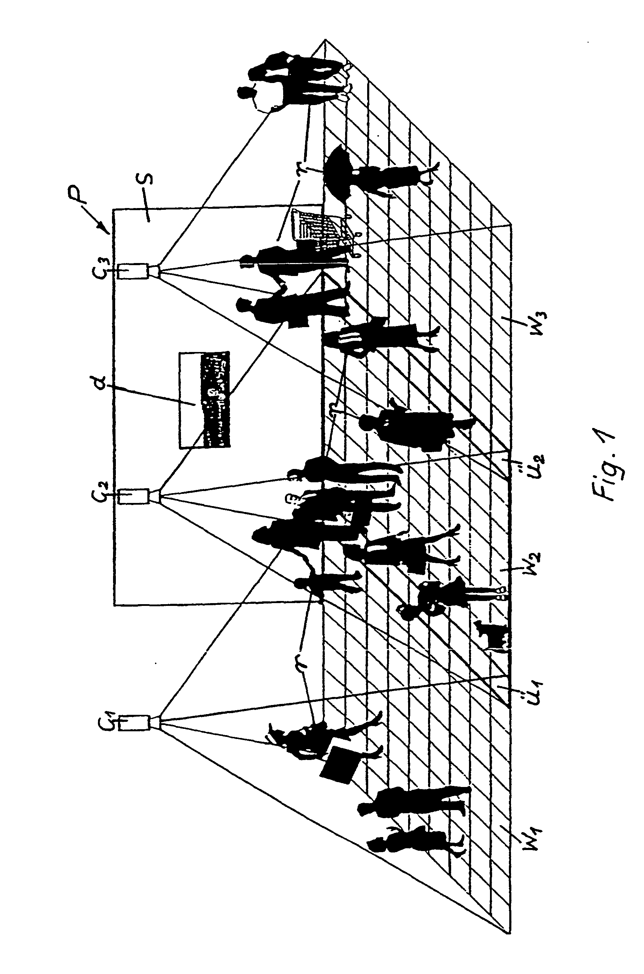

In Fig. 1 befinden sich unterschiedliche Objekte und Subjekte (Rezepienten) r mit unterschiedlichen Bewegungen und Bewegungsrichtungen in definierten Rezeptionsräumen w₁ bis w₃ einer Passage P. Die Unterschiedlichkeit der Objekte und Subjekte drückt sich in ihrem differenzierten Reflexionsverhalten aus, das wiederum bedingt ist durch Größe, Kleidung, Körperformen, Alter, Geschlecht, mitgeführte Personen und Gegenstände usw., die hier unter dem Begriff der charakteristischen oder spezifischen Merkmale zusammengefasst werden. An einer Seitenwand s des Rezeptionsraumes w₂ ist ein Display d angeordnet. Jedem Rezeptionsraum w₁ bis w₃ ist ein Kameramodul c₁ bzw. c₂ bzw. c₃, der nach einem vorgegebenen Zeitregime den Inhalt seines Rezeptionsraumes erfasst und an eine nicht dargestellte Auswerteeinrichtung weitergibt. Dadurch ist es möglich, die Personen nach Anzahl und Differenziertheit zu ermitteln, deren Bewegungen, Körperdrehungen, Kopf- und Annbewegungen und ihre Stillstände als Rezepienten r zu erfassen und daraus auf die Beachtung der Werbebotschaften des Displays zu schließen. Durch Überlappungsbereiche üᵢ wird die Übergabe der durch Koordinaten und charakteristische Merkmale identifizierten Personen in einer den Kameramodulen cᵢ nachfolgenden, in Fig. 1 nichtdargestellten, im folgenden noch zu beschreibenden Auswerteeinrichtung ermöglicht (bereichsübergreifendes Tracking).

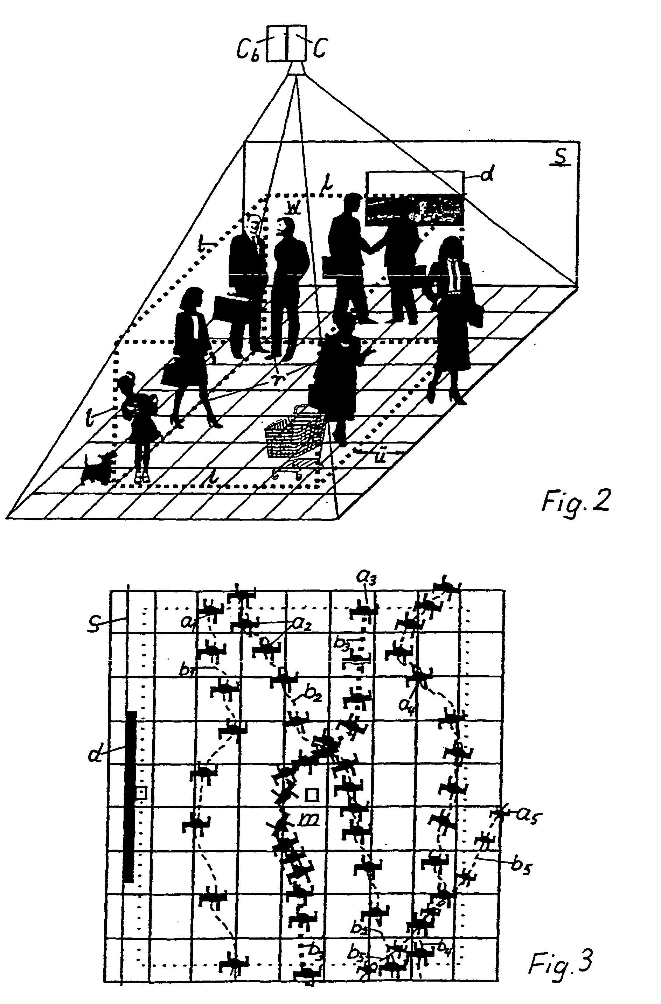

Fig. 2 stellt wieder einen unter einem Sensormodul c befindlichen Rezeptionsraum w dar, der an einer Seitenwand s ein Display d aufweist. Der Sensor c ist mit einem Biosensor c_{b} gekoppelt, der auch Bestandteil des Sensors c, in diesen integriert sein kann und von den Rezepienten r differenziert reflektierte Strahlungsmerkmale spektroskopisch oder radiologisch auswertet. Im Rezeptionsraum w befinden sich verschiedene Rezepieten r, die sich in verschiedenen Richtungen bewegen bzw. an bestimmten Stellen verharren. Ein durch einen gerissenen Linienzug 1 umgrenzter Raum verdeutlicht, dass nur die in diesem Raum befindlichen Rezepienten (Objekte bzw. Subjekte) r vollständig erfasst werden, daß also die Grundrissflächen von zueinander benachbarten Rezeptionsräumen wᵢ sich auf Grund der Zentralperspektive der optischen Abbildung zum Zwecke der Übergabe der identifizierten Personen überlappen müssen, damit alle Rezepienten hinsichtlich ihrer Bewegungen und spezifischen Merkmale vollständig bis zu einer Höhe von ca. 2 m erfasst werden können.

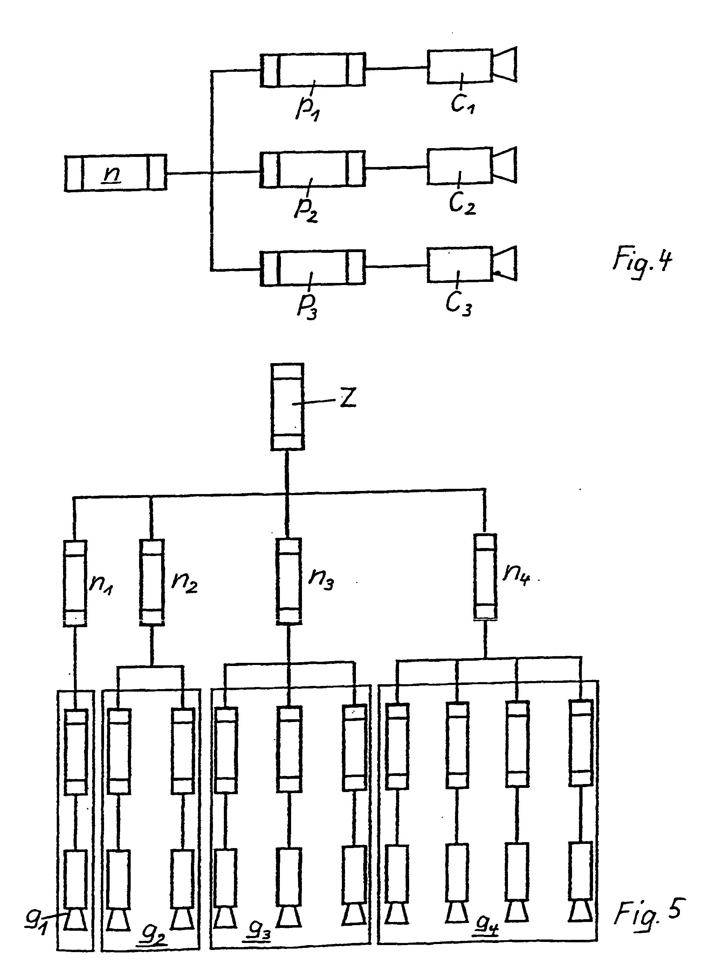

In Fig. 3 ist eine CCD-Matrix m eines Sensormoduls c mit hinreichender Auflösung dargestellt, auf dem sowohl die feststehende Seitenwand s mit dem Display d als auch die Rezepienten r als Pixelhaufen aᵢ mit personen, umgebungs- und bewegungsbedingten Grauwerten dargestellt sind, die sich auf Spuren bᵢ bewegen. Dabei sind mehrere Aufnahmen übereinander gelegt, die mit einer Frequenz von beispielsweise 25 Hz angefertigt worden sind und von denen bspw. jede vierte bzw zweite zur Auswertung benutzt werden soll. Es ist deutlich erkennbar, dass der dem Pixelhaufen a₁ entsprechende Rezepient r sich mit einer größeren Geschwindigkeit bewegt hat als die den Pixelhaufen a₂, a₃, a₄ entsprechenden Rezepienten rᵢ, von denen nur der dem Pixelhaufen a₃ entsprechende Rezepient sich dem Display zugewandt hat. Erkennbar ist aber auch, dass die den Pixelhaufen a₂, a₃, a₄ entsprechenden Rezepienten sich zu unterschiedlichen Zeiten mit stark unterschiedlichen Geschwindigkeiten bewegt haben, wobei der dem Pixelhaufen a₃ entsprechende Rezepient sein Interesse an der Display-Botschaft noch durch eine spürbare Verringerung der Geschwindigkeit bis hin zu einem Verharren erkennen lässt. Der dem Pixelhaufen a₅ entsprechende, sich auf der Spur b₅ bewegende Rezepient tangiert den abgebildeten definierten Raum nur.

In Fig. 4 sind ähnlich wie in Fig. 1 drei Sensormodule c₁, c₂, c₃ dargestellt, denen drei Bildverarbeitungsmodule pi und ein gemeinsamer Datenbankmodul n nachgeordnet sind. Die Bildverarbeitungsmodule pᵢ erzeugen konstant eine Vielzahl von Daten, durch deren zeitabhängige Analyse im Datenbankmodul n die Anzahl und das Verhalten der Kunden zeitabhängig erscheint. Anstatt räumlich getrennt können die Sensormodule cᵢ und die Bildverarbeitungsmodule pᵢ auch zu einer Einheit zusammengefasst sein.

Die zeitabhängige Analyse der Personenbewegungen und die spezifischen Personenmerkmale werden also mit den zeitabhängig visuell, audiovisuell bzw. auditiv dargebotenen Botschaften oder Aktionen verknüpft. Damit ist das spot- bzw. aktionsbezogene Verhalten von einzelnen Rezepienten ebenso analysierbar wie das von Kundenströmen. Die in den Sensormodulen cᵢ generierten Bilder werden in den Bildverarbeitungsmodulen pi verarbeitet. Dabei werden zu jeder detektierten Person spezifische optische Merkmale (Grau- oder Farbwerte usw.) ebenso ermittelt wie die Schwerpunktkoordinaten des Körpers oder von Körperteilen (Extremitäten, Kopf, Nase) und die Koordinaten von umschreibenden Vielecken. Jeder so erfassten Person wird eine Identifikationsnummer zugeordnet. Außerdem werden in den Bildverarbeitungsmodulen pᵢ die Geschwindigkeiten und Richtungsvektoren der Personenbewegung ebenso ermittelt wie ihre Distanzen vom Ort der Darbietung und voneinander.
Die so ermittelten Daten werden an das Datenbankmodul n gegeben, das daraus das Bewegungsverhalten der einzelnen Personen bis hin zur Verweildauer ebenso ermittelt wie eine mittlere Geschwindigkeit in definierten Aktions- oder Rezeptionsräumen, zu der die Geschwindigkeit der Einzelpersonen ins Verhältnis gesetzt wird. Das Datenbankmodul n kann somit direkte (originäre, z. B. Koordinaten) und indirekte (abgeleitete, z. B. Geschwindigkeit) Hinwendungskriterien ermitteln, diese wichten und Durchschnittswerte bilden.

Fig. 5 zeigt vier Modulgruppen g₁, g₂, g₃, g₄, die unterschiedlich mit Kamera- und Bildverarbeitungsmodulen bestückt sind. Zu jeder Modulgruppe g₁, g₂, g₃, g₄ gehört entsprechend ein Datenbankmodul n₁, n₂, n₃, n₄, wobei sämtliche Datenbankmodule mit einem zentralen Auswertungs- und ggf. Steuerungsmodul z verbunden sind, an den sie ihre Daten weitergeben und der sie ggf. spotabhängig steuert. Auf Grund der Analysedaten ist das Steuermodul z in der Lage, den Projektionsmodus der Spots hinsichtlich der Reihenfolge, der Standorte und der Häufigkeit zu optimieren.

### Bezugszeichenliste

- aᵢ: Pixelhaufen
- bᵢ: Spuren
- c, cᵢ: Kamera- bzw. Sensormodule
- c_{b}: Biosensor
- d: Display
- ^{g}i: Modulgruppen
- 1: Linienzug
- m: CCD-Matrix
- n, nᵢ: Datenbankmodule
- pᵢ: Bildverarbeitungsmodule
- r: Rezepienten
- s: Seitenwand
- ü, üᵢ: Überlappungsbereiche
- w, wᵢ: Rezeptionsräume
- z: zentraler Auswertungs- und Steuermodul
- P: Passage

## Patentansprüche

1. Verfahren zur Erfassung und Analyse des Rezeptionsverhaltens von Personen(r) in mindestens einem Rezeptionsraum (w₁,w₂,w₃) in Abhängigkeit von visuellen, audiovisuellen und /oder auditiven Botschaften (d), Aktionen oder Kundenstromlenkungen, wobei die Ortskoordinaten jeder Person in Gestalt der Flächenschwerpunktkoordinaten von ihrem Eintritt in den Rezeptionsraum bis zu ihrem Austritt aus dem Rezeptionsraum zeitabhängig mit einer wählbaren Frequenz erfasst werden, die vorzugsweise größer als Eins ist, **dadurch gekennzeichnet, dass** außer den Flächenschwerpunktkoordinaten weitere ausgewählte Körperkoordinaten jeder Person erfasst werden, welche sowohl Grauwertschwerpunktkoordinaten der Personen als auch differentielle Schwerpunkte einzelner Körperteile der Personen umfassen, wodurch die Schwenkungen und Drehungen des Personenkörpers und/oder von Teilen des Personenkörpers sowie die Haltung des Körpers und/oder von Teilen des Körpers ermittelt werden.

2. Verfahren gemäß Anspruch 1, **dadurch gekennzeichnet, dass** die Körperkoordinaten auch die Umrisskoordinaten der Personen oder Körperteile der Personen umfassen.

3. Verfahren gemäß Anspruch 1, **dadurch gekennzeichnet, daß** der Person mindestens eine Identifikationsgröße und zugehörige Koordinaten zugeordnet werden, die beim Wechsel der Person von einem Rezeptionsraum in einen benachbarten Rezeptionsraum zur Übernahme dieser Person dient.

4. Anordnung zur Durchführung des Verfahrens gemäß mindestens einem der Ansprüche 1 bis 3, **dadurch gekennzeichnet, daß** im oberen Bereich jedes Rezeptionsraumes mindestens ein Sensormodul (c₁,c₂,c₃) vorgesehen ist, der die elektromagnetische Strahlung von den im Rezeptionsraum befindlichen Personen erfasst, und daß dem Sensormodul ein Bildverarbeitungsmodul (p₁,p₂,p₃), der angepaßt ist zur Durchführung des Verfahrens gemäß mindestens einem der Ansprüche 1 bis 3, und ein Datenbankmodul(n) nachgeordnet sind.

5. Anordnung gemäß Anspruch 4, **dadurch gekennzeichnet, daß** einem Datenbankmodul(n) mehrere Sensormodule (c₁,c₂,c₃) und Bildverarbeitungsmodule (p₁,p₂,p₃) vorgeordnet sind.

6. Anordnung gemäß Anspruch 5, **dadurch gekennzeichnet, daß** zumindest zwei Datenbankmodule mit einem zentralen Auswertungsund Steuerungsmodul (z) verbunden sind.

7. Anordnung gemäß Anspruch 4, **dadurch gekennzeichnet, daß** dem einen Sensormodul (c) ein weiterer Sensormodul (c_{b}) zugeordnet ist, der die elektromagnetische oder thermische Strahlung einer spektroskopischen oder thermischen Auswertung zuführt.

8. Anordnung gemäß Anspruch 7, **dadurch gekennzeichnet, daß** der eine Sensormodul als CCD-Kamera ausgebildet ist.

9. Anordnung gemäß Anspruch 4, **dadurch gekennzeichnet, daß** der Sensormodul zentrisch an der Decke des Rezeptionsraumes angeordnet ist.

10. Anordnung gemäß Anspruch 4, **dadurch gekennzeichnet, daß** sich benachbarte Rezeptionsräume überlappen.

## Claims

1. A method for detecting and analyzing the reception behavior of persons (r) in at least one reception room (w₁, w₂, w₃) in dependence on visual, audiovisual and/or auditory messages (d), actions or guiding of flows of customers, whereby the position coordinates of each person, from her/his entry into the reception room up to her/his exit from the reception room, are detected time-dependently by a selectable frequency, which preferably is greater unity, said position coordinates being in the form of area center of gravity coordinates, **characterized in that**, from each person, in addition to her/his area center of gravity coordinates, further selected body coordinates of each person are detected, which comprise both, gray value concentration point coordinates of the persons and differential concentration points of single parts of the body of the persons, whereby the turns and rotations of the body of the person and/or of parts of the body of the person as well as the posture and/or the posture of parts of the body are detected.

2. Method as claimed in claim 1, **characterized in that** the body coordinates also comprise the outline coordinates of the persons or of parts of the body of the persons.

3. Method as claimed in claim 1, **characterized in that** at least one identification value and respective coordinates are associated to a person, which are used for taking over said person when moving from one reception room to a neighboring one.

4. Arrangement for carrying out said method as claimed in at least one of the claims 1 through 3, **characterized in that** at least one sensor module (c₁, c₂, c₃) is provided in the upper range of each reception room, said sensor module being adapted for detecting the electromagnetic radiation from the person present in said reception room, and **in that** the sensor module is followed by an image processing module (p₁, p₂, p₃) which is adapted for carrying out said method as claimed in at least one of the claims 1 throug 3 and a database module.

5. An arrangement as claimed in claim 4, **characterized in that** a plurality of sensor modules (c₁, c₂, c₃) and image processing modules (p₁, p₂, p₃) are pre-connected to said database module (n).

6. An arrangement as claimed in claim 5, **characterized in that** at least two database modules are connected to a central evaluation and control module (z).

7. An arrangement as claimed in claim 4, **characterized in that** a further sensor module (c) is associated to said one sensor module (c_{b}), said further sensor module is adapted for feeding the electromagnetic or thermal radiation to a spectroscopic or thermal evaluation.

8. An arrangement as claimed in claim 7, **characterized in that** said one sensor module is a CCD-camera.

9. An arrangement as claimed in claim 4, **characterized in that** the sensor module is centrally arranged at the ceiling of the reception room.

10. An arrangement as claimed in claim 4, **characterized in that** adjacent reception rooms are overlapping each other.

## Revendications

1. Procédé pour détecter et analyser l'attitude réceptive des sujets récepteurs (r) se trouvant dans un même espace au moins (w₁, w₂, w₃), en tant que réaction aux messages, actions et/ou orientations de flux de clientèle communiqués par voie visuelle, audiovisuelle et auditive, les coordonnées définissant le lieu où se trouve le sujet récepteur, exprimées sous forme de coordonnées représentant les points de gravité surfaciques, étant saisies en temps réel à une fréquence à déterminer mais de préférence supérieure à Un, est **caractérisé en ce que**, outre les coordonnées représentant les points de gravité surfaciques, encore d'autres corrodonnées physiques sélectionnées de chacune des personnes observées sont saisies et prises en compte, comprenant aussi bien des coordonnées traduisant les concentrations des valeurs grises reflétées des personnes repérées que le points de gravité différentiels caractérisant certaines parties du corps des différentes personnes observées, ce qui permet de représenter leurs mouvements dans le sens latéral et les rotations des corps des individus observés et/ou des parties de leurs corps ainsi que l'attitude du corps d'un individu dans son ensemble et /ou des parties de son corps.

2. Le procédé selon la revendication 1 est **caractérisé en ce que** les coordonnées du corps comprennent également les coordonnées des des contours de la personne toute entière ou de certaines parties de son corps.

3. Le procédé selon la revendication 1 est **caractérisé en ce qu'**au moins une grandeur d'identification avec les coordonnées s'y rapportant est attribuée à chaque personne passant d'un espace ciblé par un message publicitaire, à un autre, dans le but de pouvoir assurer son suivi.

4. La configuration des dispositifs pour assurer la réalisation de la procédure selon au moins une des revendications 1 à 3 est **caractérisée en ce qu'**il est prévu de placer dans la partie supérieure de chacun des espaces réceptifs ciblés par un message publicitaire, au moins un module détecteur (c₁, c₂, c₃) saisissant les rayonnements électromagnétiques émis par les personnes se trouvant dans l'espace réceptif et qu'un module de traitement d'images (p₁, p₂, p₃) adapté à la réalisation du procédé suivant au moins une des revendication 1 à 3 et un module faisant fonction de banque de données (n) sont montés en aval du module détecteur.

5. La configuration selon la revendication 4 est **caractérisée en ce que** plusieurs modules détecteurs (c₁, c₂, c₃) et plusieurs modules de traitement d'images (p₁, p₂, p₃) son montés en amont d'un module de banque de données.

6. La configuration du dispositif suivant la revendication 5 est **caractérisée en ce que** au moins deux modules faisant fonction de banque de données sont reliés à un module central d'analyse et de contrôle (z).

7. La configuration suivant la revendication 4 est **caractérisée en ce que** le module détecteur (c) est complété par un autre module détecteur (c_{b}) destiné à amener les rayonnements électromagnétiques et thermiques vers le lieu d'analyse spectroscopique ou thermique.

8. La configuration selon la revendication 7 est **caractérisée en ce qu'**un module détecteur (c ) est conçu comme une caméra CCD.

9. La configuration selon la revendication 4 est **caractérisée en ce que** le module détecteur est disposé au milieu du plafond de l'espace réceptif ciblé par les messages publicitaires.

10. La configuration selon la revendication 4 est **caractérisée en ce que** les zones voisines dans l'espace réceptif se superposent.
